# EUROPÄISCHE PATENTANMELDUNG

(11) **EP 2 722 578 A1**
(43) Veröffentlichungstag der Anmeldung: **23.04.2014**
(21) Anmeldenummer: 12188762.4
(22) Anmeldetag: 17.10.2012
(51) Int. Cl.: F21S 8/10, F21V 8/00

(54) **Flächenlichtleiterelement, Leuchtmittel und Kraftfahrzeugleuchte**

(71) Anmelder: odelo GmbH, 71409 Schwaikheim (DE)
(72) Erfinder: Würtenberger, Dagmar, 70190 Stuttgart (DE); Borowski, Martin, 71334 Waiblingen (DE); Specht, Stephanie, 71409 Schwaikheim (DE)
(74) Vertreter: Benninger, Johannes

(57) **Zusammenfassung**

Es werden ein Flächenlichtleiterelement (01), ein hiermit ausgestattetes Leuchtmittel (10) und eine Kraftfahrzeugleuchte mit einem solchen Leuchtmittel (10) beschrieben. Das Flächenlichtleiterelement (01) umfasst eine Lichtleitervorderseite (02) mit wenigstens einer Lichtaustrittsfläche (03), eine Lichtleiterrückseite (04) mit zumindest einer der wenigstens einen Lichtaustrittsfläche (03) auf der Lichtleitervorderseite (02) zugeordneten Lichtumlenkfläche mit einem oder mehreren Lichtauskoppelelementen, und die Lichtleitervorderseite (02) und die Lichtleiterrückseite (04) verbindende seitliche Schmalseiten (06), sowie jeweils eine die Lichtleitervorderseite (02) und die Lichtleiterrückseite (04) und die seitlichen Schmalseiten (05, 06) miteinander verbindende obere Schmalseite (07) und untere Schmalseite (08), von denen die obere Schmalseite (07) oder die untere Schmalseite (08) eine Lichteinkoppelfläche (09) zur Einkopplung von Licht (11) einer Lichtquelle (12) in das Flächenlichtleiterelement (01) aufweist, welches Licht (11) in zumindest einer Abstrahlrichtung entlang mindestens einer auf der wenigstens einen Lichtaustrittsfläche (03) auf der Lichtleitervorderseite (02) aufstehenden Achse (13) wieder aus dem Flächenlichtleiterelement (01) austritt. Eine seitliche Schmalseite (05) bildet eine erste lichtbrechende Fläche (14) nach der Lichtquelle (12), welche das von der Lichtquelle (12) eingestrahlte Licht (11) gleichmäßig über die Höhe (15) des Flächenlichtleiterelements (01) zwischen dessen oberer Schmalseite (07) und unterer Schmalseite (08) verteilt in mindestens eine Richtung (16) zur gegenüberliegenden, seitlichen Schmalseite (06) hin umlenkt. Die mindestens eine Richtung (16) ist von der Lichtleitervorderseite (02), der Lichtleiterrückseite (04) sowie der oberen Schmalseite (07) und der unteren Schmalseite (08) begrenzt. Die mindestens eine Lichtumlenkfläche mit wenigstens einem Lichtauskoppelelement bildet eine zweite lichtbrechende Fläche nach der Lichtquelle (12), welche das von der ersten lichtbrechenden Fläche (14) umgelenkte Licht (16) zur wenigstens einen Lichtaustrittsfläche (03) auf der Lichtleitervorderseite (02) hin umlenkt, wo es in der zumindest einen Abstrahlrichtung aus dem Flächenlichtleiterelement (01) austritt.

## Beschreibung

Die Erfindung betrifft ein Flächenlichtleiterelement gemäß dem Oberbegriff des Anspruchs 1, ein mit einem solchen Lichtleiterelement ausgestattetes Leuchtmittel gemäß dem Oberbegriff des Anspruchs 9 sowie eine mit mindestens einem solchen Leuchtmittel ausgestattete Kraftfahrzeugleuchte gemäß dem Oberbegriff des Anspruchs 12.

Eine Kraftfahrzeugleuchte umfasst im Wesentlichen einen von einem Leuchtengehäuse und einer Lichtscheibe umschlossenen Leuchteninnenraum und mindestens ein darin beherbergtes Leuchtmittel für wenigstens eine Lichtfunktion der Kraftfahrzeugleuchte. In dem Leuchteninnenraum kann mindestens ein hinter wenigstens einer Lichtquelle des zumindest einen Leuchtmittels angeordneter Reflektor untergebracht sein. Der Reflektor kann zumindest zum Teil durch ein separates Bauteil und/oder durch wenigstens einen Teil des Leuchtengehäuse selbst, beispielsweise vermittels einer zumindest teilweisen reflektierenden Beschichtung, gebildet sein.

Wenigstens einer Lichtquelle des Leuchtmittels können ein oder mehrere Optikelemente, wie etwa mindestens eine Linse, mindestens ein Rinnenkonzentrator, z.B. mindestens eine Parabolrinne (CPC; Compound Parabolic Concentrator) oder dergleichen zur Ausformung einer definierten Abstrahlcharakteristik zugeordnet sein.

Die Lichtscheibe ist durch eine transparente Abdeckung gebildet, welche den Leuchteninnenraum sowie die von diesem beherbergten Bauteile gegen Witterungseinflüsse schützt.

In dem Leuchteninnenraum kann im Strahlengang zwischen wenigstens einer Lichtquelle des Leuchtmittels und der Lichtscheibe wenigstens eine Optikscheibe angeordnet sein, welche beispielsweise eine bestimmte Struktur und/oder Maskierung aufweisen kann, etwa um bei einer klaren, beispielsweise für einen Betrachter eine Tiefenwirkung bewirkenden Lichtscheibe das Leuchtmittel und/oder dessen mindestens eine Lichtquelle zu kaschieren. Das Leuchtengehäuse bzw. der Leuchteninnenraum kann in mehrere Leuchtenkammern mit jeweils eigenen Lichtquellen und/oder Leuchtmitteln, eventuell Reflektoren und/oder Optikelementen und/oder Optikscheiben, sowie gegebenenfalls Lichtscheiben unterteilt sein, von denen mehrere oder alle Leuchtenkammern gleiche oder jede Leuchtenkammer eine andere Lichtfunktionen erfüllen kann.

Bei einer Lichtfunktion handelt es sich dabei um eine durch Abstrahlung von Licht einer bestimmten Farbe in einer bestimmten Helligkeit und Richtung verwirklichte, zur Erfüllung einer Aufgabe vorgesehene Funktion der Kraftfahrzeugleuchte. Jede Kraftfahrzeugleuchte erfüllt je nach Ausgestaltung eine oder mehrere Aufgaben bzw. Funktionen. Zur Erfüllung jeder Aufgabe bzw. Funktion ist eine Lichtfunktion der Kraftfahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer auch als Schlusslichtfunktion bezeichneten Rücklichtfunktion, zur Sicherstellung einer Sichtbarkeit des Kraftfahrzeugs bei Tag und/oder Nacht, wie etwa bei einer Ausgestaltung als Heckleuchte oder Tagfahrleuchte. Beispiele für Kraftfahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Ein Leuchtmittel für wenigstens eine Lichtfunktion umfasst zumindest wenigstens eine Lichtquelle, beispielsweise mindestens eine Glühlampe oder mindestens eine Gasentladungslampe oder mindestens eine Leuchtdiode sowie gegebenenfalls Kombinationen hiervon.

Beispielsweise kommen als Lichtquellen von Leuchtmitteln für Kraftfahrzeugleuchten unter anderem wegen ihres geringen Stromverbrauchs vermehrt Leuchtdioden zum Einsatz. Diese bestehen aus mindestens einem Lichtemittierende-Diode-Halbleiter-Chip, kurz LED-Chip, sowie wenigstens einer beispielsweise durch Spritzgießen angeformten, den mindestens einen LED-Chip ganz oder teilweise umhüllenden Primäroptik. Auch sind Kraftfahrzeugleuchten bekannt, in denen reine LED-Chips ohne angeformte Primäroptiken zum Einsatz kommen. Im Folgenden wird deshalb der Einfachheit halber nicht mehr zwischen Leuchtdiode und LED-Chip unterschieden und statt dessen einheitlich der Begriff LED stellvertretend für beide Ausgestaltungen verwendet, es sei denn, es ist explizit etwas anderes erwähnt. Herausragende Eigenschaften von LEDs im Vergleich zu anderen, konventionellen Lichtquellen von Leuchtmitteln sind eine wesentlich längere Lebensdauer und eine wesentlich höhere Lichtausbeute bei gleicher Leistungsaufnahme. Dadurch und unter anderem auch wegen ihrer kompakteren Abmessungen können durch Verwendung von LEDs als Lichtquelle von Leuchtmitteln Kraftfahrzeugleuchten verwirklicht werden, die an fast jede nur erdenkliche Einbausituation angepasst sein können.

Eine typische Anpassung an die Einbausituation betrifft die äußere Gestalt der Kraftfahrzeugleuchte. Diese äußere Gestalt der Kraftfahrzeugleuchte ist beispielsweise durch die gestalterische Formgebung eines Kraftfahrzeugs sowie durch die vorgesehene Kontur der Kraftfahrzeugleuchte vorgegeben und spiegelt sich im so genannten Strakverlauf der Kraftfahrzeugleuchte wider.

Eine weitere typische Anpassung einer Kraftfahrzeugleuchte an die Einbausituation betrifft den zur Verfügung stehenden Bauraum. Dabei wird ein möglichst geringer Bauraumbedarf angestrebt, beispielsweise um bei einer Ausgestaltung einer Kraftfahrzeugleuchte als Heckleuchte mehr Platz für den Kofferraum eines Kraftfahrzeugs zur Verfügung zu haben und um gleichzeitig Material und Gewicht zu sparen, wodurch beispielsweise Energieeinsparungen, wie etwa Verbrauchseinsparungen von Treibstoff oder einer geringeren Belastung eines Stromspeichers einhergehend mit einer Verringerung der Umweltbelastung sowohl bei der Herstellung, als auch im Betrieb des Kraftfahrzeugs erreicht werden können.

Neben der Anpassung an die Einbausituation müssen Kraftfahrzeugleuchten sehr hohe Qualitätsanforderungen erfüllen. So werden beispielsweise bereits geringe Abweichungen von einem homogenen Eindruck des Erscheinungsbilds sowohl im ausgeschalteten Zustand des Leuchtmittels, dem so genannten Kaltzustand, wie beispielsweise ein dunkel erscheinendes Lampenloch, als auch im so genannten Warmzustand bei eingeschaltetem Leuchtmittel, wie beispielsweise hinsichtlich der Ausleuchtung einer Leuchtenkammer und/oder eines Reflektors, und/oder ein möglicherweise blendender direkter Blick des Betrachters auf die Lichtquelle eines Leuchtmittels, als qualitätsmindernd angesehen..

Um den hohen Qualitätsanforderungen an Kraftfahrzeugleuchten gerecht zu werden, ist es deshalb ein Ziel bei der Entwicklung von Kraftfahrzeugleuchten, die Lichtquellen einer oder mehrerer Lichtfunktionen einer Kraftfahrzeugleuchte vor dem direkten Blick eines Betrachters zu verbergen.

Um eine oder mehrere, ihr Licht in einen oder mehrere Reflektoren strahlende Lichtquellen eines Leuchtmittels dem Blick des Betrachters zu entziehen, welches Licht mittels Reflexion an entsprechenden Formen bzw. Reflektorstrukturen auf dem Reflektor, wie etwa Kissen, Walzen, etc., in die gewünschte Richtung gelenkt wird, ist bekannt, die Lichtquelle beispielsweise oberhalb oder unterhalb des Reflektors oder neben diesem anzuordnen und das von ihr abgestrahlte Licht seitlich in einen Reflektor einzustrahlen. Hierdurch ist die Lichtquelle für den Betrachter beim direkten Blick aus normaler Richtung, wie dies der Sicht eines anderen Verkehrsteilnehmers bei in ein Kraftfahrzeug eingebautem Zustand entspricht, auf die Kraftfahrzeugleuchte nicht erkennbar. Diese wird erst sichtbar, sobald der Betrachter von oben oder unten her in die Kraftfahrzeugleuchte blickt. Da dies tatsächlich eher selten vorkommt, können Lichtquellen auf diese Art gut verborgen werden und der Reflektor weitestgehend lampenlochfrei gehalten werden.

Aufgrund der meist starken Strakverläufe ist es jedoch nicht immer möglich die Lichtquellen in einer lichttechnisch günstigen Lage, wie etwa direkt abstrahlend oder von oben oder unten her in den Reflektor einstrahlend einzubinden. Zum anderen kann hierdurch unabhängig vom Strakverlauf nicht vollständig sichergestellt werden, dass dadurch ein direkter Blick auf die Lichtquelle von außen durch die Lichtscheibe hindurch vollständig verwehrt ist.

So kommt es insbesondere bei starken Strakverläufen vor, dass die Lichtquellen bei der Betrachtung von außerhalb der Kraftfahrzeugleuchte durch die Lichtscheibe hindurch teilweise sichtbar sind. Eine zumindest aus einigen Blickwinkeln von außerhalb der Kraftfahrzeugleuchte durch die Lichtscheibe hindurch sichtbare Lichtquelle eines zur Erfüllung einer Lichtfunktion vorgesehenen Leuchtmittels wird als störend und den Qualitätseindruck nachhaltig negativ beeinflussend empfundenen.

Ein vollständiges Verbergen der Lichtquellen ist erst z. B. mittels nachfolgend Lichtleiterelemente genannter, auch als Lichtleiter bezeichneter, totalreflektierender (TIR; Total Internal Reflection), lichtleitender Elemente mit wenigstens einem Lichteinkoppelbereich und zumindest einem Lichtaustrittsbereich möglich, die das in sie am Lichteinkoppelbereich eingekoppelte Licht von einer verborgen angeordneten Lichtquelle in Richtung Lichtaustrittsbereich leiten, wo es gegebenenfalls unter Brechung beim Übergang vom Lichtleitermaterial in das diesen umgebende Medium, typischerweise Luft, wieder austritt. Das wiederausgetretene Licht kann dabei direkt, ohne einen Reflektor in der gewünschten Richtung abgestrahlt werden, oder indirekt, indem es in einen Reflektor eingestrahlt wird, der es dann in die gewünschte Richtung reflektiert.

Bei einer Kraftfahrzeugleuchte können ein oder mehrere Lichtleiterelemente vorgesehen sein, beispielsweise um eine gewünschte Lichtverteilung z.B. über die Lichtscheibe hinweg des von einer oder mehreren Lichtquellen ausgestrahlten Lichts zu erhalten.

Ein Lichtleiterelement, in das Licht mindestens einer Lichtquelle an mindestens einer Lichteinkoppelfläche wenigstens eines Lichteinkoppelbereichs ein- und an mindestens einer von der Lichteinkoppelfläche verschiedenen Lichtaustrittsfläche zumindest eines Lichtaustrittsbereichs wieder ausgekoppelt wird, kann dabei als ein separates Bauteil im Leuchteninnenraum beherbergt oder Teil eines Leuchtmittels sein.

Beispielsweise kann ein Leuchtmittel einen oder mehrere Lichtleiterelemente sowie eine oder mehrere, das von ihnen ausgestrahlte Licht zumindest zum Teil in das wenigstens eine Lichtleiterelement einkoppelnde Lichtquellen umfassen.

Das Lichtleiterelement kann beispielsweise stabförmig als so genanntes Stablichtleiterelement und/oder flächig als so genanntes Flächenlichtleiterelement ausgebildet sein, mit zumindest einer auf seiner beispielsweise normal zur Hauptabstrahlrichtung einer Kraftfahrzeugleuchte orientierten Vorderseite angeordneten Lichtaustrittsfläche.

Insbesondere bei großflächigen Flächenlichtleiterelementen ist eine homogene Ausleuchtung des Lichtleiterelements notwendig, um im beleuchteten Zustand hohe, gestellte Qualitätsanforderungen hinsichtlich eines gleichmäßigen Erscheinungsbilds, das frei von mit bloßem Auge erkennbaren Helligkeitsunterschieden ist, zu erfüllen.

Zur homogenen Ausleuchtung großflächiger Flächenlichtleiterelemente werden bislang mehrere Lichtquellen eingesetzt, typischerweise LEDs, welche entlang einer seitlichen Schmalseite des Flächenlichtleiterelements angeordnet über jeweils zugeordnete Lichteinkoppelflächen Licht quer zu einer Hauptabstrahlrichtung einkoppeln, bevor dieses an der der Hauptabstrahlrichtung abgewandten Lichtleiterrückseite angeordnete Auskoppelelemente in Richtung der Hauptabstrahlrichtung einmalig umgelenkt und auf der Lichtleitervorderseite gegebenenfalls unter Brechung zur Hauptlichtabstrahlrichtung hin durch die oder eine Lichtaustrittsfläche aus dem Flächenlichtleiterelement austritt.

Nachteilig an einer solchen Lösung ist neben des hohen Herstellungs- und Kostenaufwands für die mehreren Lichtquellen, dass für eine derartige Anordnung nicht immer genügend Bauraum seitlich des Flächenlichtleiterelements zur Verfügung steht.

Durch DE 103 14 350 A1 ist bekannt, Licht einer einzelnen Lichtquelle von unten in ein Lichtleiterelement einzukoppeln. Dabei ist eine einmalige Lichtumlenkung im Lichtleiterelement vorgesehen. Die Lichtleiterrückseite als einzige lichtbrechende Fläche des Flächenlichtleiterelements weist quer zur Hauptabstrahlrichtung betrachtet einen parabelförmigen Verlauf auf. Die Lichtverteilung im Lichtleiterelement genügt dabei nicht zur homogenen Ausleuchtung eines Flächenlichtleiterelements, wodurch dieses im beleuchteten Zustand fleckig und ungleichmäßig ausgeleuchtet erscheinen würde. Den immer weiter steigenden Qualitätsanforderungen beispielsweise im Automobilbereich kann damit nicht mehr nachgekommen werden.

Um eine homogene Ausleuchtung von Flächenlichtleiterelementen zu erzielen, sind deshalb mehrere Lichtquellen zur Lichteinkopplung vorgesehen, was jedoch einen hohen konstruktiven und schaltungsintensiven Aufwand, einhergehend mit hohen Herstellungskosten und hohem Stromverbrauch nach sich zieht.

Eine Aufgabe der Erfindung ist die Entwicklung eines Flächenlichtleiterelements, welches besser an jede erdenkliche Einbausituation angepasst werden kann und dabei besonders hohen Qualitätsanforderungen gerecht wird und darüber hinaus kostengünstig hergestellt und energiesparend ausgeleuchtet werden kann. Es ist ebenfalls Aufgabe der Erfindung ein Leuchtmittel mit mindestens einem solchen Flächenlichtleiterelement sowie eine vorzugsweise als Kraftfahrzeugheckleuchte ausgestaltete bzw. ausgestaltbare Kraftfahrzeugleuchte mit wenigstens einem mindestens ein solches Flächenlichtleiterelement umfassenden Leuchtmittel zu entwickeln.

Die Aufgabe wird gelöst mit den Merkmalen der unabhängigen Ansprüche.

Ein erster Gegenstand der Erfindung betrifft demnach ein Flächenlichtleiterelement mit:
- einer Lichtleitervorderseite umfassend wenigstens eine Lichtaustrittsfläche,
- einer Lichtleiterrückseite umfassend zumindest eine der wenigstens einen Lichtaustrittsfläche auf der Lichtleitervorderseite zugeordnete Lichtumlenkfläche mit einem oder mehreren Lichtauskoppelelementen, und
- zwei die Lichtleitervorderseite und die Lichtleiterrückseite verbindende seitliche Schmalseiten, sowie
- jeweils eine die Lichtleitervorderseite und die Lichtleiterrückseite und die seitlichen Schmalseiten miteinander verbindende obere und untere Schmalseite,
- von denen die obere oder die untere Schmalseite eine Lichteinkoppelfläche zur Einkopplung von Licht einer Lichtquelle in das Flächenlichtleiterelement aufweist,
- welches via die Lichteinkoppelfläche in das Flächenlichtleiterelement eingekoppelte Licht in zumindest einer Abstrahlrichtung entlang mindestens einer auf der wenigstens einen Lichtaustrittsfläche auf der Lichtleitervorderseite aufstehenden Achse wieder aus dem Flächenlichtleiterelement austritt.

Die Achse kann dabei normal oder schief auf der wenigstens einen Lichtaustrittsfläche auf der Lichtleitervorderseite aufstehen.

Bei dem Flächenlichtleiterelement ist vorgesehen, dass eine erste seitliche Schmalseite eine erste lichtbrechende Fläche nach der Lichtquelle bildet, welche das von der Lichtquelle eingestrahlte Licht gleichmäßig über die zwischen der oberen und unteren Schmalseite verbleibende Höhe des Flächenlichtleiterelements zwischen dessen oberer und unterer Schmalseite verteilt in mindestens eine Richtung weg von der ersten seitlichen Schmalseite zur dieser gegenüberliegenden, zweiten seitlichen Schmalseite des Flächenlichtleiterelements hin umlenkt. Die mindestens eine Richtung ist von der Lichtleitervorderseite, der Lichtleiterrückseite sowie der oberen und unteren Schmalseite umhüllt und damit zwischen der Lichtleitervorderseite und der Lichtleiterrückseite durch den Verlauf der oberen und der unteren Schmalseite begrenzt.

Bei dem Flächenlichtleiterelement ist ferner vorgesehen, dass die zumindest eine der wenigstens einen Lichtaustrittsfläche auf der Lichtleitervorderseite zugeordnete Lichtumlenkfläche mit einem oder mehreren Lichtauskoppelelementen eine zweite lichtbrechende Fläche nach der Lichtquelle bildet. Diese zweite lichtbrechende Fläche lenkt das von der ersten lichtbrechenden Fläche gleichmäßig über die zwischen der oberen und unteren Schmalseite verbleibende Höhe des Flächenlichtleiterelements zwischen dessen oberer und unterer Schmalseite verteilt in mindestens eine Richtung von der ersten, seitlichen Schmalseite zur dieser gegenüberliegenden, zweiten seitlichen Schmalseite des Flächenlichtleiterelements hin umgelenkte Licht zur wenigstens einen Lichtaustrittsfläche auf der Lichtleitervorderseite hin um, wo es gegebenenfalls unter Brechung beim Übergang vom Material des Flächenlichtleiterelements zum dieses umgebenden Medium in der zumindest einen Abstrahlrichtung entlang der mindestens einen auf der Lichtaustrittsfläche aufstehenden Achse wieder aus dem Flächenlichtleiterelement austritt.

Eine vorteilhafte Ausgestaltung des Flächenlichtleiterelements sieht vor, dass die erste lichtbrechende Fläche entgegen der zumindest einen Abstrahlrichtung betrachtet zumindest abschnittsweise einen Verlauf entsprechend einer mathematischen Funktion aufweist.

Bei der mathematischen Funktion für den Verlauf der ersten lichtbrechenden Fläche entgegen der zumindest einen Abstrahlrichtung betrachtet kann es sich um eine Gerade oder um eine Parabel handeln. Wichtig ist hervorzuheben, dass die Aufzählung nicht als abschließend zu verstehen ist. So kann beispielsweise grundsätzlich auch eine andere, von einer Geraden oder einer Parabel abweichende mathematische Funktion den Verlauf der ersten lichtbrechenden Fläche beschreiben.

Das Flächenlichtleiterelement kann alternativ oder zusätzliche einen zumindest abschnittsweise sphärischen und/oder asphärischen Verlauf der ersten lichtbrechenden Fläche entgegen der zumindest einen Abstrahlrichtung betrachtet aufweisen.

Die erste lichtbrechende Fläche kann mit einem oder mehreren Lichtumlenkelementen versehen sein, welche das von der Lichtquelle eingestrahlte Licht gleichmäßig über die zwischen der oberen und unteren Schmalseite verbleibende Höhe des Flächenlichtleiterelements zwischen dessen oberer und unterer Schmalseite verteilt in mindestens eine Richtung von der ersten seitlichen Schmalseite zur dieser gegenüberliegenden, zweiten seitlichen Schmalseite des Flächenlichtleiterelements hin umlenken.

Bei dem Flächenlichtleiterelement kann:
- sich die zwischen der Lichtleitervorderseite und der Lichtleiterrückseite erstreckende Tiefe des Flächenlichtleiterelements zu einer oder mehreren Schmalseiten hin wenigstens abschnittsweise verjüngen, und/oder
- die Lichtleitervorderseite und die Lichtleiterrückseite an einer oder mehreren Schmalseiten zumindest abschnittsweise aneinandergrenzen bzw. sich die Lichtleitervorderseite und die Lichtleiterrückseite einander an einer oder mehreren Schmalseiten zumindest abschnittsweise berühren, und/oder
- die Lichtleitervorderseite und die Lichtleiterrückseite an einer oder mehreren Schmalseiten zumindest abschnittsweise in einem Radius aneinander angrenzen bzw. in einem Radius ineinander übergehen,
- wenigstens eine Schmalseite wenigstens abschnittsweise einen zumindest teilweisen geraden und/oder gekrümmten Flächenverlauf aufweisen, und/oder
- wenigstens eine Schmalseite zumindest abschnittsweise einen ebenen und/oder gewölbten Flächenverlauf umfasst.

Zusammengefasst müssen damit die Schmalseiten des Flächenlichtleiterelements weder parallel zueinander verlaufen, noch müssen die Schmalseiten gerade oder eben verlaufen.

Beispielsweise kann eine Schmalseite eine ebene und/oder gewölbte Fläche umfassen, wohingegen eine andere Schmalseite eine nur infinitessimale, sich zwischen Lichtleitervorderseite und der Lichtleiterrückseite erstreckende Breite aufweisen kann, wo Lichtleitervorderseite und der Lichtleiterrückseite beispielsweise in einem spitzen Winkel einander berühren oder in einem Radius ineinander übergehen bzw. aneinander angrenzen können.

Das Flächenlichtleiterelement kann an einen Strakverlauf einer Kraftfahrzeugleuchte angepasst sein.

Es ist ersichtlich, dass die Auskopplung des in das Flächenlichtleiterelement eingekoppelten Lichts nach mindestens zweifacher Umlenkung des eingekoppelten Lichts durch Totalreflexion an zumindest einer ersten und einer zweiten Lichtumlenkfläche des Flächenlichtleiterelements erfolgt. Die zweite lichtbrechende Fläche ist gegenüber der Lichtaustrittsfläche angeordnet. Die erste lichtbrechende Fläche ist neben der Lichteinkoppelfläche angeordnet und verbindet die Lichtleitervorder- mit der Lichtleiterrückseite.

Ein zweiter Gegenstand der Erfindung betrifft ein Leuchtmittel mit mindestens einem zuvor beschriebenen Flächenlichtleiterelement und einer diesem zugeordneten Lichtquelle. Das von der Lichtquelle abgestrahlte Licht über die Lichteinkoppelfläche in das Flächenlichtleiterelement eingekoppelt.

Das Flächenlichtleiterelement kann mit zumindest einer Lichtquelle verbunden sein. Vorzugsweise ist das Flächenlichtleiterelement an die Lichtquelle angespritzt. Das Flächenlichtleiterelement kann aber auch als ein separates Bauteil des Leuchtmittels ausgeführt sein.

Das Flächenlichtleiterelement kann vorteilhaft durch Spritzgießen hergestellt werden. Dabei kann vorgesehen sein, dass das Flächenlichtleiterelement bei seiner Herstellung direkt anstelle oder zusätzlich zu einer bereits vorhandenen Umkapselung der Lichtquelle an die Lichtquelle angespritzt wird.

Vorteilhaft handelt es sich bei der Lichtquelle um eine LED. Diese weist einerseits die Eingangs geschilderten Vorteile einer hohen Lichtausbeute bei gleichzeitig geringem Energiebedarf auf, und kann andererseits beispielsweise in ein Spritzgießwerkzeug eingebracht werden, in dem das Flächenlichtleiterelement hergestellt wird, beispielsweise um die als LED ausgeführte Lichtquelle direkt und einstückig mit dem Flächenlichtleiterelement zu verbinden.

Weitere Vorteile bei der Verwendung einer LED als Lichtquelle ergeben sich dadurch, dass eine LED zumindest annäherungsweise als Punktlichtquelle angesehen werden kann. Dies führt dazu, dass das Licht eines ausgelegten Flächenlichtleiterelements weniger gestreut wird, als bei einer Lichtquelle in Form einer Glühlampe mit einer räumlich ausgedehnten Glühwendel. Hierdurch kann das Flächenlichtleiterelement exakter ausgeführt werden, wodurch darüber hinaus eine höhere, dem Verhältnis des wunschgemäß an der oder den Lichtaustrittsflächen austretenden Lichtstroms zum an der Lichteinkoppelfläche eingekoppelten Lichtstrom entsprechende Effizienz des optischen Systems erhalten wird.

LEDs weisen außerdem bei gleicher Lichtstärke einen im Vergleich zu anderen Lichtquellen geringeren Stromverbrauch auf. Hierdurch kann bei einer Verwendung des Flächenlichtleiterelements beispielsweise in einer Kraftfahrzeugleuchte die Belastung eines zur Stromversorgung vorgesehenen Bordnetzes eines Kraftfahrzeugs verringert werden, einhergehend mit Einsparungen beim Energieverbrauch des Kraftfahrzeugs. Ferner weisen LEDs eine weit höhere Lebensdauer auf, als andere, zur Anwendung beispielsweise in einer Kraftfahrzeugleuchte in Frage kommende Lichtquellen. Durch die längere Lebensdauer wird unter Anderem durch die geringere Ausfallquote die Betriebssicherheit und damit einhergehend die Qualität der Kraftfahrzeugleuchte erhöht.

Zum Betrieb von LEDs als Lichtquellen für ein Leuchtmittel beispielsweise einer Kraftfahrzeugleuchte können eine oder mehrere mehr oder minder komplexe elektronische Steuerschaltungen vorgesehen sein, die beispielsweise auf einem oder mehreren Leuchtmittelträgern des Leuchtmittels angeordnet und in dem Leuchteninnenraum beherbergt sein können.

Ein einfaches Beispiel für eine elektronische Steuerschaltung betrifft die Angleichung unterschiedlicher Helligkeiten einzelner LEDs oder von LED-Strängen innerhalb einer Gruppe gemeinsam betriebener, auf einem oder mehreren Leuchtmittelträgern angeordneter LEDs. Eine solche elektronische Steuerschaltung besteht aus mindestens einem oder mehreren Vorwiderständen zur Anpassung der Vorwärtsspannung der LEDs an das Bordnetz. Beispielsweise ist bekannt, die LEDs im so genannten Binning nach Vorwärtsspannung und Intensität zu sortieren. Um Unterschiede zwischen mehreren LED-Strängen auszugleichen, die jeweils aus in Reihe geschalteten LEDs gleicher Vorwärtsspannung und Intensität bestehen, und um eine homogene Helligkeitsverteilung der benachbarten LED-Stränge aus LEDs mit unterschiedlicher Vorwärtsspannung und Intensität zu erhalten, wird zumindest jeder LED-Strang mit einem anderen Vorwiderstand versehen.

LEDs bedürfen darüber hinaus beim Einsatz als Lichtquelle insbesondere in Kraftfahrzeugleuchten oft einer separaten Ausfallerkennung. Dies ist bedingt durch die geringe Leistungsaufnahme von LEDs im Allgemeinen. Beispielsweise ist ein in einem Kraftfahrzeug untergebrachtes Steuergerät nicht in der Lage, eine dem Ausfall einer oder weniger LEDs entsprechende Änderung der Leistungsentnahme aus dem Bordnetz zu erkennen, da eine hieraus resultierende Bordnetzspannungsänderung unterhalb der im normalen Betrieb eines Kraftfahrzeugs auftretenden Bordnetzspannungssschwankung liegt. Eine beispielsweise in der Kraftfahrzeugleuchte untergebrachte elektronische Schaltungsanordnung zur Ausfallerkennung erfasst den Ausfall einer oder mehrerer Leuchtdioden in der Kraftfahrzeugleuchte z.B. mittels eines oder mehrerer Komparatoren und teilt dies dem Steuergerät mit. Diese elektronische Schaltungsanordnung zur Ausfallerkennung kann durch eine beispielsweise auf dem Leuchtmittelträger aufgebrachte elektronische Steuerschaltung verwirklicht sein.

Darüber hinaus können LEDs weiterer elektronischer Steuerschaltungen bedürfen. Beispiele hierfür sind elektronische Steuerschaltungen:
- zur Regelung und/oder Steuerung der Helligkeit bzw. Leuchtkraft der LEDs, beispielsweise durch eine pulsweitenmodulierte Taktung der Stromversorgung für einen außerhalb des für das menschliche Auge wahrnehmbaren Bereichs gepulsten Betrieb,
- zur Kompensation oder Vermeidung elektromagnetischer Störungen, beispielsweise aufgebaut aus Kondensatoren und/oder Ferriten,
- zum Schutz der LEDs z.B. vor einer Überspannung des Bordnetzes oder vor fehlerhafter Polung, beispielsweise umfassend eine oder mehrere Zenerdioden,

Zusammengefasst muss für fast alle LED-Anwendungen eine mehr oder minder umfangreiche, für die speziellen LEDs ausgelegte elektronische Steuerschaltung z.B. auf den mindestens einen Leuchtmittelträger aufgebracht werden. Die elektronische Steuerschaltung umfasst im einfachsten Fall einen Vorwiderstand und eine Schutzdiode, kann aber je nach Anwendung auch wesentlich mehr Elektronikbauteile enthalten, wie z.B. Mikrokontroller bzw. Kontroller, Komparatoren, Transistoren, Schutzdioden, elektrische Widerstände z.B. als Vorwiderstand, Kondensatoren, Ferrite, etc.

Somit kann ein beispielsweise für eine Kraftfahrzeugleuchte vorgesehenes Leuchtmittel mit wenigstens einem Flächenlichtleiterelement und einer LED als Lichtquelle zur Lichteinkopplung je Flächenlichtleiterelement neben einem Flächenlichtleiterelement zumindest ein oben genanntes Elektronikbauteil sowie mindestens eine LED umfassen. Demnach kann ein Leuchtmittel mit einem Flächenlichtleiterelement und einer LED als zur Lichteinkopplung in das Flächenlichtleiterelement vorgesehene Lichtquelle neben der LED zumindest noch über ein weiteres Elektronikbauelement verfügen.

Ein dritter Gegenstand der Erfindung betrifft eine Kraftfahrzeugleuchte mit einem von einem Leuchtengehäuse und einer Lichtscheibe umschlossenen Leuchteninnenraum, welcher mindestens ein Leuchtmittel zur Erfüllung mindestens einer Lichtfunktion der Kraftfahrzeugleuchte beherbergt. Bei dem Leuchtmittel handelt es sich um ein zuvor erwähntes Leuchtmittel umfassend wenigstens ein zuvor beschriebenes Flächenlichtleiterelement mit einer zugeordneten, das von ihr abgestrahlte Licht an der Lichteinkoppelfläche des Flächenlichtleiterelements einkoppelnden Lichtquelle.

Der Leuchteninnenraum kann darüber hinaus mindestens einen beim Blick von außerhalb der Kraftfahrzeugleuchte durch die Lichtscheibe hindurch hinter dem Lichtauskoppelbereich des Flächenlichtleiterelements angeordneten Reflektor aufweisen, welcher zumindest auf dessen der Lichtscheibe zugewandte Vorderseite gestrahltes Licht gemäß einer beispielsweise gesetzliche Vorgaben an die Lichtverteilung in eine oder mehrere Vorzugrichtungen und Leuchtdichte in dieser einen oder mehreren Vorzugsrichtungen erfüllenden, vorgegebenen Abstrahlcharakteristik reflektiert.

Der Leuchteninnenraum der Kraftfahrzeugleuchte kann in eine oder mehrere, einer gemeinsamen und/oder verschiedenen Lichtfunktionen zugeordnete Leuchtenkammern unterteilt sein, von denen mindestens eine Leuchtenkammer mit einem ein zuvor beschriebenes Flächenlichtleiterelement und eine diesem zugeordnete Lichtquelle umfassenden, zuvor beschrieben Leuchtmittel ausgestattet ist.

Die Kraftfahrzeugleuchte kann beispielsweise als Heckleuchte für ein Kraftfahrzeug ausgebildet sein.

Die Kraftfahrzeugleuchte erlaubt die Nutzbarmachung sämtlicher sich durch ein zuvor beschriebenes Flächenlichtleiterelement gegenüber dem Stand der Technik ergebenden Vorteile bei Kraftfahrzeugleuchtenanwendungen.

Zusammengefasst sieht die Erfindung zur Lösung der gestellten Aufgabe unter erheblicher Bauraumeinsparung vor, eine einzige, besonders bevorzugt als LED ausgeführte Lichtquelle an einer oberen oder unteren Schmalseite eines Flächenlichtleiterelements anzuordnen. Das von der Lichtquelle via einer zugeordneten Lichteinkoppelfläche in das Flächenlichtleiterelement eingekoppelte Licht wird zunächst an einer seitlichen Schmalseite gleichmäßig über die Höhe des Flächenlichtleiterelements verteilt umgelenkt, bevor es anschließend in Richtung weg von der seitlichen Schmalseite zwischen den oberen und unteren Schmalseiten im Flächenlichtleiterelement propagiert, wo es dann durch an der Lichtleiterrückseite angeordnete Auskoppelelemente in Richtung einer oder mehrerer Abstrahlrichtungen umgelenkt und auf der Lichtleitervorderseite gegebenenfalls unter Brechung aus dem Flächenlichtleiterelement austritt.

Die seitliche Schmalseite bildet dabei eine erste lichtbrechende Fläche nach der Lichtquelle.

Die erste lichtbrechende Fläche weist entgegen der Richtung der Hauptabstrahlrichtung betrachtet zumindest abschnittsweise einen Verlauf entsprechend einer beispielsweise von einer Geraden abweichenden mathematischen Funktion auf.

Der Verlauf kann abschnittsweise sphärisch und/oder asphärisch sein.

Vorteile gegenüber dem Stand der Technik sind eine homogene Ausleuchtung des Flächenlichtleiterelements und ein geringer Bauraumbedarf eines ein solches Flächenlichtleiterelement umfassenden Leuchtmittels. Ferner trägt das Flächenlichtleiterelement durch die Notwendigkeit von nur noch einer Lichtquelle zu dessen homogener Ausleuchtung erheblich zu Kosteneinsparungen bei der Herstellung von wenigstens ein Flächenlichtleiterelement umfassenden Leuchtmitteln bei. Beim Einsatz in einer Kraftfahrzeugleuchte werden durch eine Vereinfachung des elektrischen Anschlusses nur noch einer Lichtquelle sowie durch die damit einhergehende Bauraumeinsparung Gewicht und Bauraum eingespart, was beispielsweise bei einer Kraftfahrzeugheckleuchte entweder zu einer Verkleinerung des Kraftfahrzeugs einhergehend mit Gewichts- und Verbrauchseinsparungen, oder zu einer Vergrößerung des typischerweise an den Einbauort einer Kraftfahrzeugheckleuchte angrenzenden Laderaums und der Zuladung des Kraftfahrzeugs führt.

Vorteile ergeben sich demnach durch:
- einen geringeren Bauraumbedarf
- Kosteneinsparungen aufgrund des Verzichts auf weitere Lichtquellen,
- verringerten Schaltungs- und Kontaktierungsaufwands aufgrund des Verzichts auf weitere Lichtquellen,
- Gewichtseinsparungen aufgrund des Verzichts auf weitere Lichtquellen und des verringerten Bauraumbedarfs,
- Kraftstoffeinsparungen eines mit einer solchen Lichtleiteranordnung versehenen Kraftfahrzeugleuchte ausgestatteten Kraftfahrzeugs,
- vergrößertes Ladevolumen eines Gepäckabteils eines mit einer mit einem solchen Flächenlichtleiterelement ausgestatteten Leuchtmittel versehenen Kraftfahrzeugleuchte ausgestatteten Kraftfahrzeugs.

Hierdurch kann der generellen Forderungen beispielsweise an Kraftfahrzeugteile und Kraftfahrzeugkomponenten bezüglich Kostensenkung bei Herstellung und Montage unter Einbeziehung von Flächenlichtleiterelementen bei der Verwirklichung von Lichtfunktionen gerecht geworden werden.

Zusätzliche Vorteile gegenüber dem Stand der Technik ergeben sich dadurch, dass durch einen Bedarf von höchstens der Hälfte der Anzahl der bisher beim Stand der Technik benötigten Lichtquellen zur homogenen Ausleuchtung auch großflächiger Flächenlichtleiterelemente ein geringerer Bauraumbedarf bei gleichzeitig hohem Qualitätseindruck verwirklicht werden kann. Hierdurch können vermittels des Leuchtmittels beispielsweise Kraftfahrzeugleuchten hergestellt werden, welche besser an jede erdenkliche Einbausituation angepasst werden können und dabei besonders hohen Qualitätsanforderungen gerecht werden.

Der hohe Qualitätseindruck kann unter anderem dadurch erreicht werden, weil eine höhere Homogenität der Lichtverteilung innerhalb des Lichtleiters erhalten wird, indem durch eine mehrfache Umlenkung eine gleichmäßige Verteilung des in das Flächenlichtleiterelement eingekoppelten Lichts vorgenommen wird.

Weitere Vorteile gegenüber dem Stand der Technik ergeben sich durch die Verringerung der zur Erfüllung einer Lichtfunktion erforderlichen Lichtquellen. Hierdurch wird deren Anzahl verringert, wodurch das Leuchtmittel und damit einhergehend eine mit einem solchen ausgestattete, beispielsweise als Kraftfahrzeugheckleuchte ausgeführte Kraftfahrzeugleuchte kostengünstig hergestellt werden kann.

Zusätzliche Vorteile ergeben sich dadurch, dass im auch als Warmzustand bezeichneten eingeschalteten Zustand des Leuchtmittels ein direkter Blick auf die zur Erfüllung mindestens einer Lichtfunktion der Kraftfahrzeugleuchte vorgesehene Lichtquelle des Leuchtmittels verhindert ist.

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:

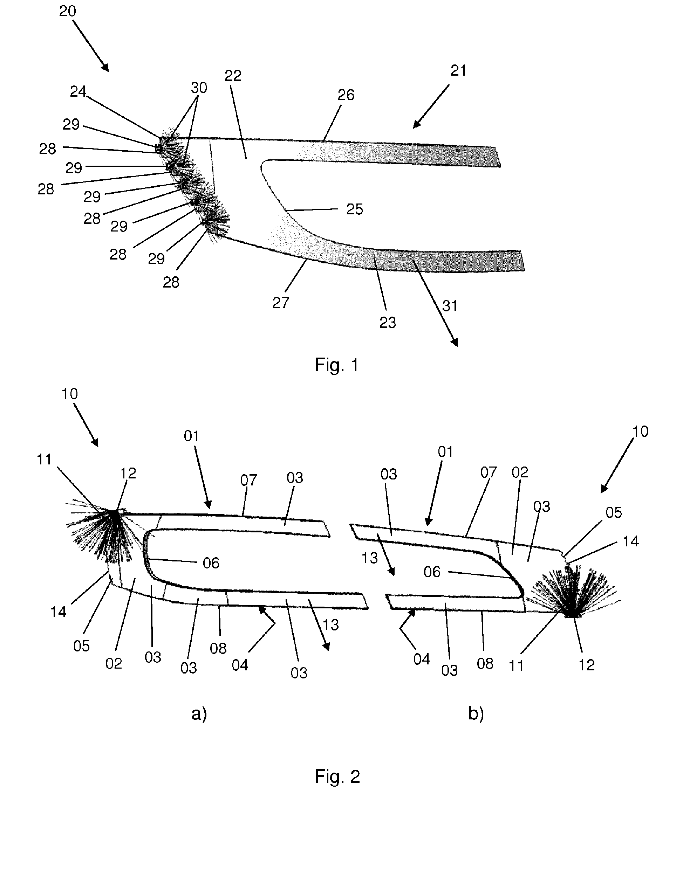

- Fig. 1: eine Draufsicht auf die Lichtleitervorderseite eines Leuchtmittels mit einem Flächenlichtleiter sowie mehreren, an einer seitlichen, Lichteinkoppelflächen aufweisenden Schmalseite angeordneten Lichtquellen zur Lichteinkopplung in den Flächenlichtleiter gemäß dem Stand der Technik.
- Fig. 2: eine Draufsicht auf die Lichtleitervorderseite eines erfindungsgemäßen Leuchtmittels gemäß eines ersten Ausführungsbeispiels (Fig. 2 a)) und eines zweiten Ausführungsbeispiels (Fig. 2 b)) mit einem Flächenlichtleiter sowie einer an einer eine Lichteinkoppelfläche aufweisenden, oberen Schmalseite (Fig. 2 a)) bzw. unteren Schmalseite (Fig. 2 b)) angeordneten Lichtquelle zur Lichteinkopplung in den Flächenlichtleiter.

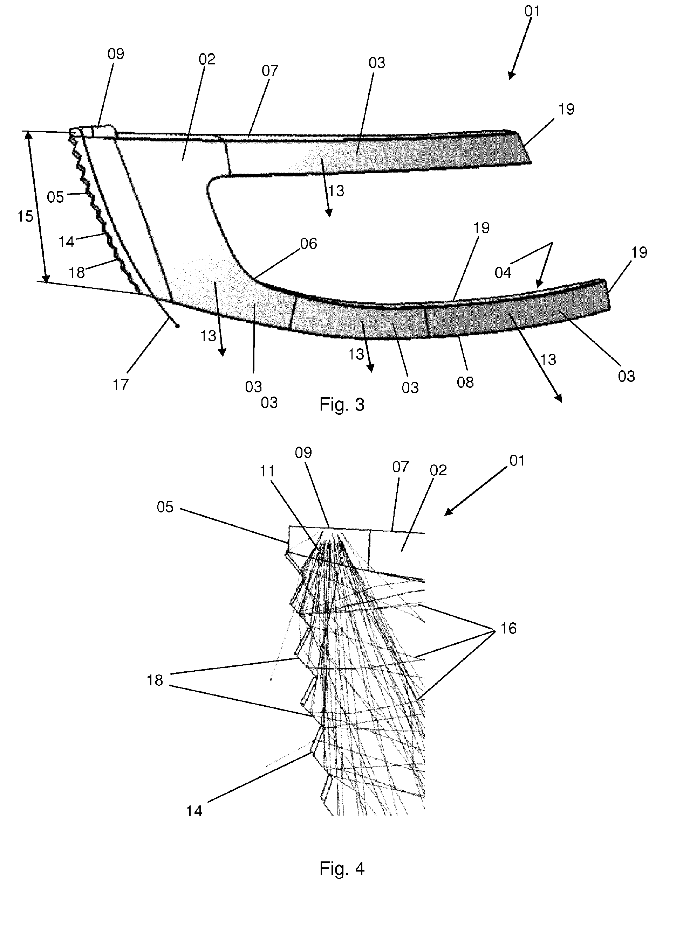

- Fig. 3: eine perspektivische Ansicht eines Flächenlichtleiters mit einem Verlauf der ersten lichtbrechenden Fläche entgegen einer Abstrahlrichtung des Flächenlichtleiters betrachtet entsprechend einer mathematischen Funktion einer Parabel gemäß einem dritten Ausführungsbeispiel.
- Fig. 4: eine Detailansicht eines Ausschnitts einer ersten lichtbrechende Fläche mit mehreren Lichtumlenkelementen eines Flächenlichtleiters sowie des Lichtstrahlenverlaufs bei einer Lichteinkopplung via einer an der oberen Schmalseite angeordneten Lichteinkoppelfläche gemäß einem vierten Ausführungsbeispiel.

Ein in Fig. 1 dargestelltes Leuchtmittel 20 nach dem Stand der Technik weist ein Flächenlichtleiterelement 21 mit:
- einer Lichtleitervorderseite 22 umfassend wenigstens eine Lichtaustrittsfläche 23,
- einer der Lichtleitervorderseite 22 abgewandten Lichtleiterrückseite umfassend zumindest eine der wenigstens einen Lichtaustrittsfläche 23 auf der Lichtleitervorderseite 22 zugeordnete Lichtumlenkfläche mit einem oder mehreren Lichtauskoppelelementen, und
- die Lichtleitervorderseite 22 und die Lichtleiterrückseite verbindende seitliche Schmalseiten 24, 25, sowie
- eine die Lichtleitervorderseite 22 und die Lichtleiterrückseite und die seitlichen Schmalseiten 24, 25 miteinander verbindende obere Schmalseite 26 und
- eine die Lichtleitervorderseite 22 und die Lichtleiterrückseite und die seitlichen Schmalseiten 25, 26 miteinander verbindende untere Schmalseite 27
auf.

Für eine homogene Ausleuchtung des großflächigen Flächenlichtleiterelements 21 nach dem Stand der Technik wird eine seitliche Einspeisung von mehreren LEDs als Lichtquellen 29 abgestrahlten, durch Lichtstrahlen 30 angedeuteten Lichts verwendet.

Hierzu weist eine der seitlichen Schmalseiten 24, 25, in Fig. 1 die linke Schmalseite 24, mehrere Lichteinkoppelflächen 28 zur Einkopplung des Lichts der mehreren Lichtquellen 29 in das Flächenlichtleiterelement 21 auf. Jeder Lichteinkoppelfläche 28 ist dabei eine Lichtquelle 29 zugeordnet.

Das in das Flächenlichtleiterelement 21 eingekoppelte Licht tritt in zumindest einer Abstrahlrichtung entlang mindestens einer auf der wenigstens einen Lichtaustrittsfläche 23 auf der Lichtleitervorderseite 22 aufstehenden, durch Pfeile 31 angedeuteten Achse wieder aus dem Flächenlichtleiterelement 21 aus.

Es ist ersichtlich, dass diese Lösung zur homogenen Ausleuchtung der einen oder mehreren Lichtaustrittsflächen 23 des Flächenlichtleiterelements 21 des Leuchtmittels 20 unbefriedigend ist, weil sie durch die vielen Lichtquellen 29 und die damit einhergehende, aufwändige elektrische Kontaktierung sowie konstruktive Ausgestaltung kostenintensiv ist und darüber hinaus einen nicht mehr zeitgemäßen, hohen Stromverbrauch beispielsweise aus dem Bordnetz eines Kraftfahrzeugs nach sich zieht.

Weitere Nachteile eines in Fig. 1 dargestellten Leuchtmittels 20 ergeben sich aus einem hohen Bauraumbedarf, einerseits aufgrund der vielen Lichtquellen, und andererseits, weil eine für die elektrische Kontaktierung der Vielzahl von Lichtquellen 29 vorgesehene Platine seitlich des Flächenlichtleiters 21 angeordnet werden muss.

Dies führt zu erheblichen Einschränkungen bereits bei der Konstruktion beispielsweise von mit derartigen Leuchtmitteln 20 ausgestatteten Kraftfahrzeugleuchten.

Anders verhält sich dies bei einem in Fig. 2 a), Fig. 2 b), Fig. 3 und Fig. 4 ganz oder teilweise dargestellten Leuchtmittel 10. Dieses umfasst ein Flächenlichtleiterelement 01 mit:
- einer Lichtleitervorderseite 02 umfassend wenigstens eine Lichtaustrittsfläche 03,
- einer Lichtleiterrückseite 04 umfassend zumindest eine der wenigstens einen Lichtaustrittsfläche 03 auf der Lichtleitervorderseite 02 zugeordnete Lichtumlenkfläche mit einem oder mehreren Lichtauskoppelelementen, und
- zwei gegenüberliegende, die Lichtleitervorderseite 02 und die Lichtleiterrückseite 04 verbindende, seitliche Schmalseiten 05, 06, sowie
- eine die Lichtleitervorderseite 02 und die Lichtleiterrückseite 04 und die seitlichen Schmalseiten 05, 06 miteinander verbindende obere Schmalseite 07 und
- eine die Lichtleitervorderseite 02 und die Lichtleiterrückseite 04 und die seitlichen Schmalseiten 05, 06 miteinander verbindende untere Schmalseite 08.

Die obere Schmalseite 07 (Fig. 2 a), Fig. 3, Fig. 4) oder die untere Schmalseite 08 (Fig. 2 b)) weist eine Lichteinkoppelfläche 09 zur Einkopplung von durch Lichtstrahlen 11 angedeuteten Lichts einer Lichtquelle 12 in das Flächenlichtleiterelement 01 auf.

Die Lichteinkoppelfläche 09 ist genau einer Lichtquelle 12 zugeordnet. Damit umfasst das Leuchtmittel 10 nur eine Lichtquelle 12 zur homogenen Ausleuchtung des Flächenlichtleiterelements 01. Dies verringert den Aufwand zur elektrischen Kontaktierung erheblich und trägt zu einer Verringerung des Stromverbrauchs bei.

Eine weitere Verringerung des Stromverbrauchs einhergehend mit einer höheren Effizienz des optischen Systems wird durch Verwendung einer LED als Lichtquelle 12 erreicht. Dies ist unter anderem dadurch bedingt, dass LEDs einerseits einen höheren Wirkungsgrad, als herkömmliche Lichtquellen aufweisen, und dass LEDs als Punktlichtquellen behandelt werden können, einhergehend mit den bereits zuvor beschriebenen Vorteilen.

Die Effizienz des optischen Systems lässt sich noch weiter steigern, indem das Flächenlichtleiterelement 01 an die bevorzugt als LED ausgeführte Lichtquelle 12 angespritzt wird. Hierdurch werden Überkopplungsverluste ebenso wie Ausrichtungsfehler zwischen Lichtquelle 12 und Flächenlichtleiterelement 01 vermieden.

Alternativ ist denkbar, das Flächenlichtleiterelement 01 als ein separates Bauteil des Leuchtmittels 10 vorzusehen.

Das via die Lichteinkoppelfläche 09 in das Flächenlichtleiterelement 01 eingekoppelte Licht tritt in zumindest einer Abstrahlrichtung entlang mindestens einer auf der wenigstens einen Lichtaustrittsfläche 03 auf der Lichtleitervorderseite 02 aufstehenden, durch Pfeile 13 angedeuteten Achse wieder aus dem Flächenlichtleiterelement 01 aus (Fig. 3).

Hierzu bildet eine seitliche Schmalseite 05 eine erste lichtbrechende Fläche 14 nach der Lichtquelle 12. Die erste lichtbrechende Fläche 14 lenkt das von der Lichtquelle 12 eingestrahlte Licht gleichmäßig über die sich zwischen der oberen Schmalseite 07 und der unteren Schmalseite 08 erstreckende Höhe 15 des Flächenlichtleiterelements 01 verteilt in mindestens eine Richtung zur gegenüberliegenden Schmalseite 06 des Flächenlichtleiterelements 01 hin um. Die mindestens eine Richtung ist durch die Erstreckung des Flächenlichtleiterelements 01 weg von der ersten lichtbrechenden Fläche 14 vorgegeben. Dabei ist die mindestens eine Richtung von der Lichtleitervorderseite 02, der Lichtleiterrückseite 04 sowie der oberen Schmalseite 07 und der unteren Schmalseite 08 begrenzt.

In Fig. 4 ist die mindestens eine Richtung durch Lichtstrahlen 16, welche ausgehend von der Lichteinkoppelfläche 09 nach deren Umlenkung an der ersten lichtbrechenden Fläche 14 weg von dieser führen, dargestellt.

Die mindestens eine Lichtumlenkfläche auf der Lichtleiterrückseite 04 bildet mit einem oder mehreren Lichtauskoppelelementen eine zweite lichtbrechende Fläche nach der Lichtquelle 12. Die zweite lichtbrechende Fläche lenkt das von der ersten lichtbrechenden Fläche 14 umgelenkte Licht zur wenigstens einen Lichtaustrittsfläche 03 auf der Lichtleitervorderseite 02 hin um, wo es in der zumindest einen Abstrahlrichtung aus dem Flächenlichtleiterelement 01 austritt.

Zur gleichmäßig über die Höhe 15 des Flächenlichtleiterelements 01 verteilten Umlenkung des Lichts weist die erste lichtbrechende Fläche 14 entgegen der zumindest einen Abstrahlrichtung betrachtet zumindest abschnittsweise einen durch eine in Fig. 4 dargestellte Kurve 17 angedeuteten Verlauf entsprechend wenigstens einer mathematischen Funktion auf.

Der Verlauf kann zumindest abschnittsweise der mathematischen Funktion einer Geraden entsprechen. Alternativ oder zusätzlich kann der Verlauf zumindest abschnittsweise der mathematischen Funktion einer Parabel entsprechen. Denkbar ist auch ein zumindest abschnittsweise sphärischer oder asphärischer Verlauf der ersten lichtbrechenden Fläche 14 entgegen der zumindest einen Abstrahlrichtung betrachtet.

Der Verlauf kann eine sich zumindest abschnittsweise an der seitlichen Schmalseite 05 zwischen der Lichtleitervorderseite 02 und der Lichtleiterrückseite 04 erstreckende Wölbung der ersten lichtbrechenden Fläche 14 umfassen.

Zur Umlenkung des von der Lichtquelle 12 eingekoppelten Lichts kann die erste lichtbrechende Fläche 14 mit einem oder mehreren Lichtumlenkelementen 18 versehen sein, welche das von der Lichtquelle 12 eingestrahlte Licht gleichmäßig über die Höhe 15 des Flächenlichtleiterelements 01 verteilt in mindestens eine Richtung zur gegenüberliegenden Schmalseite 06 des Flächenlichtleiterelements 01 hin umlenken.

Die Lichtumlenkelemente 18 sind dabei bevorzugt in einem durch die Kurve 17 dargestellten und einer mathematischen Funktion entsprechenden, sphärischen und/oder asphärischen Verlauf angeordnet.

Eine gleichmäßige, homogene Lichtverteilung im Flächenlichtleiterelement 01 kann dabei durch Winkel- und Längenvariationen der Lichtumlenkelemente 18 eingestellt werden.

Wichtig ist hervorzuheben, dass:
- sich die Tiefe des Flächenlichtleiterelements 01 zu einer oder mehreren Schmalseiten 05, 06, 07, 08 hin wenigstens abschnittsweise verjüngen kann, und/oder
- die Lichtleitervorderseite 02 und die Lichtleiterrückseite 04 zumindest abschnittsweise an einer oder an beiden seitlichen Schmalseiten 05, 06 aneinandergrenzen, und/oder
- die Lichtleitervorderseite 02 und die Lichtleiterrückseite 04 an einer oder an beiden seitlichen Schmalseiten 05, 06 zumindest abschnittsweise in einem Radius ineinander übergehen,
- wenigstens eine Schmalseite 05, 06, 07, 08 wenigstens abschnittsweise einen geraden und/oder gekrümmten Flächenverlauf aufweist, und/oder
- wenigstens eine Schmalseite 05, 06, 07, 08 zumindest abschnittsweise einen ebenen und/oder gewölbten Flächenverlauf umfasst.

Beispielsweise kann die seitliche Schmalseite 06 mehrere Flächenabschnitte 19 mit unterschiedlich ausgeprägtem Flächenverlauf aufweisen.

Beispielsweise kann die seitliche Schmalseite 06 einen mittleren Flächenabschnitt 19 mit einem gekrümmten, entgegen der Abstrahlrichtung gesehen C-förmigen Flächenverlauf aufweisen, sowie sich unter einem Winkel beidseitig an den mittleren Flächenabschnitt 19 anschließend jeweils Flächenabschnitte 19 mit einem geraden Flächenverlauf.

Ebenso wichtig ist hervorzuheben, dass die Lichteinkoppelfläche 09 einen zumindest abschnittsweise ebenen und/oder gekrümmten und/oder gewölbten, beispielsweise sphärischen oder asphärischen Flächenverlauf aufweisen kann, sofern sich eine Materialgrenze zwischen der Lichtquelle 12 und dem Flächenlichtleiterelement 01 ergibt.

Bei einer Kraftfahrzeugleuchte mit einem von einem Leuchtengehäuse und einer Lichtscheibe umschlossenen Leuchteninnenraum, welcher mindestens ein Leuchtmittel 10 zur Erfüllung mindestens einer Lichtfunktion der Kraftfahrzeugleuchte beherbergt, kann vermittels des Flächenlichtleiterelements 01 das in dieses von der Lichtquelle 12 eingekoppelte Licht direkt in einer gewünschten Lichtverteilung ausgekoppelt werden, oder die Auskopplung erfolgt in einen Reflektor, welcher die gewünschte Lichtverteilung besorgt, und der ebenfalls Teil des Leuchtmittels 10 sein kann.

Die Kraftfahrzeugleuchte kann beispielsweise als Heckleuchte ausgebildet sein.

Die Erfindung ist insbesondere im Bereich der Herstellung von Flächenlichtleiterelementen und Leuchtmitteln für Beleuchtungszwecke sowie für Kraftfahrzeugleuchten gewerblich anwendbar.

### Bezugszeichenliste

- 01: Flächenlichtleiterelement
- 02: Lichtleitervorderseite
- 03: Lichtaustrittsfläche
- 04: Lichtleiterrückseite
- 05: seitliche Schmalseite
- 06: seitliche Schmalseite
- 07: obere Schmalseite
- 08: untere Schmalseite
- 09: Lichteinkoppelfläche
- 10: Leuchtmittel
- 11: Lichtstrahl
- 12: Lichtquelle
- 13: Pfeil
- 14: erste lichtbrechende Fläche
- 15: Höhe
- 16: Lichtstrahl
- 17: Kurve
- 18: Lichtumlenkelement
- 19: Abschnitt
- 20: Leuchtmittel
- 21: Flächenlichtleiterelement
- 22: Lichtleitervorderseite
- 23: Lichtaustrittsfläche
- 24: seitliche Schmalseite
- 25: seitliche Schmalseite
- 26: obere Schmalseite
- 27: untere Schmalseite
- 28: Lichteinkoppelfläche
- 29: Lichtquelle
- 30: Lichtstrahl
- 31: Pfeil

## Patentansprüche

1. Flächenlichtleiterelement (01) mit:
- einer Lichtleitervorderseite (02) umfassend wenigstens eine Lichtaustrittsfläche (03),
- einer Lichtleiterrückseite (04) umfassend zumindest eine der wenigstens einen Lichtaustrittsfläche (03) auf der Lichtleitervorderseite (02) zugeordnete Lichtumlenkfläche mit einem oder mehreren Lichtauskoppelelementen, und
- die Lichtleitervorderseite (02) und die Lichtleiterrückseite (04) verbindende seitliche Schmalseiten (06), sowie
- jeweils eine die Lichtleitervorderseite (02) und die Lichtleiterrückseite (04) und die seitlichen Schmalseiten (05, 06) miteinander verbindende obere Schmalseite (07) und untere Schmalseite (08),
- von denen die obere Schmalseite (07) oder die untere Schmalseite (08) eine Lichteinkoppelfläche (09) zur Einkopplung von Licht (11) einer Lichtquelle (12) in das Flächenlichtleiterelement (01) aufweist,
- welches Licht (11) in zumindest einer Abstrahlrichtung entlang mindestens einer auf der wenigstens einen Lichtaustrittsfläche (03) auf der Lichtleitervorderseite (02) aufstehenden Achse (13) wieder aus dem Flächenlichtleiterelement (01) austritt,
**dadurch gekennzeichnet,**
**dass** eine seitliche Schmalseite (05) eine erste lichtbrechende Fläche (14) nach der Lichtquelle (12) bildet, welche das von der Lichtquelle (12) eingestrahlte Licht (11) gleichmäßig über die Höhe (15) des Flächenlichtleiterelements (01) zwischen dessen oberer Schmalseite (07) und unterer Schmalseite (08) verteilt in mindestens eine Richtung (16) zur gegenüberliegenden, seitlichen Schmalseite (06) hin umlenkt, welche mindestens eine Richtung (16) von der Lichtleitervorderseite (02), der Lichtleiterrückseite (04) sowie der oberen Schmalseite (07) und der unteren Schmalseite (08) begrenzt ist, und die mindestens eine Lichtumlenkfläche mit wenigstens einem Lichtauskoppelelement eine zweite lichtbrechende Fläche nach der Lichtquelle (12) bildet, welche das von der ersten lichtbrechenden Fläche (14) umgelenkte Licht (16) zur wenigstens einen Lichtaustrittsfläche (03) auf der Lichtleitervorderseite (02) hin umlenkt, wo es in der zumindest einen Abstrahlrichtung aus dem Flächenlichtleiterelement (01) austritt.

2. Flächenlichtleiterelement nach Anspruch 1,
**dadurch gekennzeichnet,**
**dass** die erste lichtbrechende Fläche (14) entgegen der zumindest einen Abstrahlrichtung betrachtet zumindest abschnittsweise einen Verlauf (17) entsprechend wenigstens einer mathematischen Funktion aufweist.

3. Flächenlichtleiterelement nach Anspruch 2, **gekennzeichnet durch** eine mathematischen Funktion einer Geraden.

4. Flächenlichtleiterelement nach Anspruch 2 oder 3, **gekennzeichnet durch** eine mathematischen Funktion einer Parabel (17).

5. Flächenlichtleiterelement nach einem der Ansprüche 1 bis 4, **gekennzeichnet durch** einen zumindest abschnittsweise sphärischen Verlauf (17) der ersten lichtbrechenden Fläche entgegen der zumindest einen Abstrahlrichtung betrachtet.

6. Flächenlichtleiterelement nach einem der Ansprüche 1 bis 5, **gekennzeichnet durch** einen zumindest abschnittsweise asphärischen Verlauf der ersten lichtbrechenden Fläche entgegen der zumindest einen Abstrahlrichtung betrachtet.

7. Flächenlichtleiterelement nach einem der Ansprüche 1 bis 6,
**dadurch gekennzeichnet,**
**dass** die erste lichtbrechende Fläche (14) mit einem oder mehreren Lichtumlenkelementen (18) versehen ist, welche das von der Lichtquelle (12) eingestrahlte Licht (11) gleichmäßig über die Höhe (15) des Flächenlichtleiterelements (01) verteilt in mindestens eine Richtung (16) zur gegenüberliegenden seitlichen Schmalseite (06) des Flächenlichtleiterelements (01) hin umlenken.

8. Flächenlichtleiterelement nach einem der Ansprüche 1 bis 7,
**dadurch gekennzeichnet, dass**:
- sich die Tiefe des Flächenlichtleiterelements (01) zu einer oder mehreren Schmalseiten (05, 06, 07, 08) hin wenigstens abschnittsweise verjüngt, und/oder
- die Lichtleitervorderseite (02) und die Lichtleiterrückseite (04) an einer oder mehreren Schmalseiten (05, 06, 07, 08) zumindest abschnittsweise aneinandergrenzen, und/oder
- die Lichtleitervorderseite (02) und die Lichtleiterrückseite (04) an einer oder mehreren Schmalseiten (05, 06, 07, 08) zumindest abschnittsweise in einem Radius ineinander übergehen,
- wenigstens eine Schmalseite (05, 06, 07, 08) wenigstens abschnittsweise einen geraden und/oder gekrümmten Flächenverlauf aufweist, und/oder
- wenigstens eine Schmalseite (05, 06, 07, 08) zumindest abschnittsweise einen ebenen und/oder gewölbten Flächenverlauf aufweist.

9. Leuchtmittel (10) mit mindestens einem Flächenlichtleiterelement (01) und einer diesem zugeordneten Lichtquelle (12),
**gekennzeichnet durch**
ein Flächenlichtleiterelement (01) nach einem der vorhergehenden Ansprüche, wobei das von der Lichtquelle (12) abgestrahlte Licht (11) über die Lichteinkoppelfläche (09) in das Flächenlichtleiterelement (01) eingekoppelt wird.

10. Leuchtmittel nach Anspruch 9,
**dadurch gekennzeichnet,**
**dass** das Flächenlichtleiterelement (01) und die Lichtquelle (12) vorzugsweise durch Anspritzen direkt miteinander verbunden sind.

11. Leuchtmittel nach Anspruch 9 oder 10,
**gekennzeichnet durch**
eine LED als Lichtquelle (12).

12. Kraftfahrzeugleuchte mit einem von einem Leuchtengehäuse und einer Lichtscheibe umschlossenen Leuchteninnenraum, welcher mindestens ein Leuchtmittel (10) zur Erfüllung mindestens einer Lichtfunktion der Kraftfahrzeugleuchte beherbergt,
**gekennzeichnet durch**
wenigstens ein Leuchtmittel (10) nach Anspruch 9, 10 oder 11.
